# EUROPEAN PATENT APPLICATION

(11) **EP 4 105 772 A1**
(43) Date of publication of application: **21.12.2022**
(21) Application number: 20918842.4
(22) Date of filing: 07.12.2020
(51) Int. Cl.: G06F 3/12, B41J 3/407, B41J 29/38, B41J 29/387, G05B 19/418

(54) **CAN BODY PRINTING SYSTEM AND CAN BODY PRINTING DEVICE**

(30) Priority: 12.02.2020 JP 2020021890
(71) Applicant: ALTEMIRA Co., Ltd., Tokyo 112-8525 (JP)
(72) Inventor: OJIMA, Shinichi, Tokyo 141-0031 (JP); MATSUSHIMA, Hitomi, Tokyo 141-0031 (JP); FUJINUMA, Kenji, Tokyo 141-0031 (JP)
(74) Representative: Strehl Schübel-Hopf & Partner
(86) International application number: PCT/JP2020/045404
(87) International publication number: WO 2021/161634

(57) **Abstract**

A can body printing system includes: a measurement section 34 configured to measure, for a predetermined unit, a quantity of can bodies subjected to printing; a quantity detection section 304 configured to detect, for the unit, that the quantity measured for the unit reaches a predetermined allowable quantity of can bodies for the printing; and a print stopping section 305 configured to control a stoppage of the printing on can bodies in response to the detection by the quantity detection section 304.

## Description

### Technical Field

The present invention relates to a can body printing system and a can body printing device.

### Background Art

Patent Literature 1 discloses technology for a parts monitoring device configured to detect usage of parts that are not regular ones and to limit operations of working machines upon detection of such usage.

### Citation List

### Patent Literature

Patent Literature 1: Japanese Patent Application Laid-Open Publication No. 2013-101686

### Summary of Invention

### Technical Problem

Recent advancements in technology for printing on can bodies have made it possible to allow users to consider performing printing on can bodies by themselves, which was previously impossible.

However, if users are allowed to perform printing too freely, printing may be performed on can bodies that are not regular ones. In such cases, intended print quality may not be achieved.

It is an object of the present invention to provide can bodies with better print quality as compared to when users are allowed to freely perform printing without any limitations.

### Solution to Problem

A can body printing system according to an aspect of the present invention includes: a measurement section configured to measure, for a predetermined unit, a quantity of can bodies subjected to printing; a detection section configured to detect, for the unit, that the quantity reaches a predetermined allowable quantity of the can bodies for the printing; and a control section configured to control a stoppage of the printing in response to detection by the detection section.

The measurement section may be configured to measure the quantity of can bodies subjected to the printing by using a piece of content used for the printing as the unit, and the detection section may be configured to detect that the quantity of can bodies subjected to the printing reaches an allowable quantity of can bodies for the printing, the allowable quantity being predetermined for the piece of content.

The measurement section may be configured to measure the quantity of can bodies subjected to the printing by using a delivery destination of the can bodies as the unit, and the detection section may be configured to detect that the quantity of can bodies subjected to the printing reaches an allowable quantity of can bodies for the printing, the allowable quantity being predetermined for the delivery destination.

The measurement section may be configured to measure the quantity of can bodies subjected to the printing by using a type of contents enclosed in the can bodies as the unit, and the detection section may be configured to detect that the quantity of can bodies subjected to the printing reaches an allowable quantity of can bodies for the printing, the allowable quantity being predetermined for each of the type of contents.

A can body printing system according to another aspect of the present invention includes: a host device; and a can body printing device configured to digitally print on can bodies, the can body printing device being subject to a limit on printing imposed by the host device. The can body printing device is configured to: acquire content to be processed for printing on can bodies, wherein a limited quantity of can bodies is allowed to have the content printed thereon; and print the acquired content on can bodies in the limited quantity.

The host device may be configured to limit a number of can bodies on which the content is to be printed, based on a number of can bodies that are determined to be subjected to printing as regular can bodies.

A can body printing device according to still another aspect of the present invention includes: a printing section configured to print on can bodies; a measurement section configured to measure a quantity of the can bodies subjected to printing; and a stopping section configured to stop the printing in response to the quantity reaching a predetermined allowable quantity of can bodies for the printing, the predetermined quantity being predetermined for each predetermined unit.

### Advantageous Effects of Invention

The present invention provides can bodies with better print quality as compared to when users are allowed to freely perform printing without any limitations.

### Brief Description of Drawings

FIG. 1 illustrates a hardware configuration of a can body printing system according to an embodiment.
FIG. 2 illustrates a functional configuration of a printing device-side (a printing device or the printing device and a user PC) according to the embodiment.
FIG. 3 illustrates a functional configuration of a host device according to the embodiment.
FIG. 4 is a flowchart of a process executed by the printing device-side according to the embodiment.
FIGS. 5A and 5B are flowcharts of processes executed by the host device.
FIG. 6 is a flowchart of a process executed by the host device when the host device measures a print quantity.

### Description of Embodiments

### [Configuration of can body printing system]

Hereinafter, a can body printing system according to an exemplary embodiment is detailed with reference to the appended drawings.

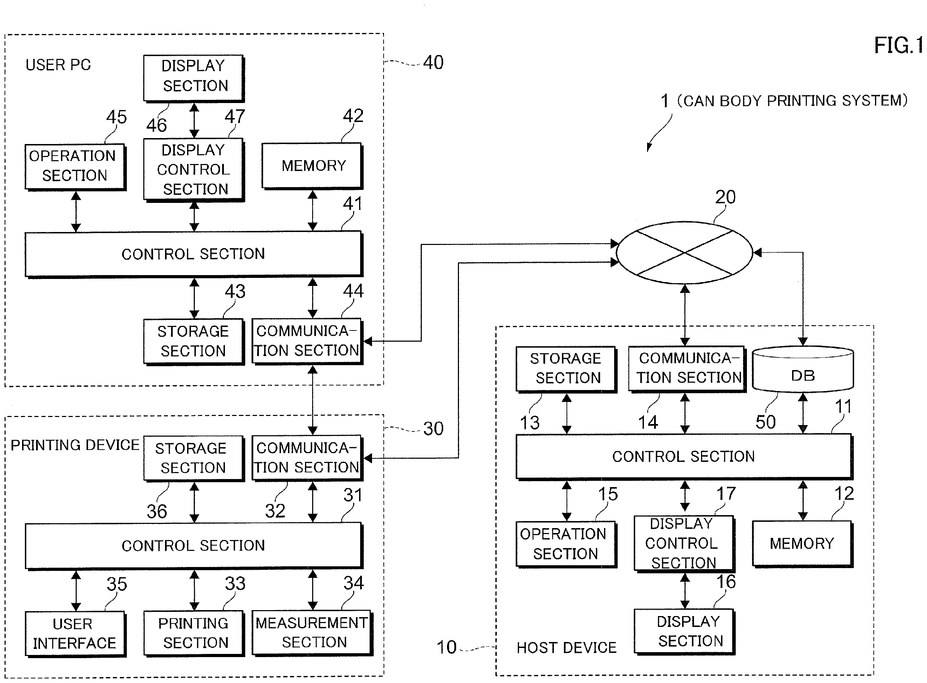

FIG. 1 illustrates a hardware configuration of a can body printing system 1 according to the present embodiment. The can body printing system 1 includes: a host device 10 that is an information processing device on which the can body printing system 1 is based; and a printing device 30 for a user who performs printing on can bodies. The host device 10 and the printing device 30 are connected via a network 20, such as the Internet. In an implementation, a user PC 40 connected to the printing device 30 and operated by the user who performs printing on can bodies may be connected to the host device 10 via the network 20.

The host device 10 is a computer device provided by, for example, a provider of can bodies subjected to printing by the printing device 30 or a provider of the printing device 30. A database (DB) 50 storing various kinds of information for use in the can body printing system 1 is connected to the host device 10 either directly or via the network 20.

The host device 10 includes: a control section 11 implemented by a central processing unit (CPU) to control the entire device; and a memory 12, such as a random access memory (RAM), used as a working area for calculations. The host device 10 further includes a storage section 13 to store programs and various setting data. Examples of the storage section 13 include storage devices such as semiconductor memories and hard disk drives (HDDs). The host device 10 further includes a communication section 14 for data exchange via the network 20.

The host device 10 further includes an operation section 15, such as a keyboard, a pointing device, and/or a touch panel, and receives inputs from administrators responsible for the can body printing system 1. The host device 10 further includes a display section 16, such as one implemented by a liquid crystal display, for presentation of images and text information necessary for administrative tasks performed by the administrators. The host device 10 further includes a display control section 17 to control the display section 16. It should be noted that these pieces of hardware do not necessarily share a single housing.

The printing device 30 includes: a control section 31 to control the entire device; and a communication section 32 for exchanges of various data via the network 20. The printing device 30 further includes a printing section 33 to produce printing on can bodies. The printing device 30 further includes a measurement section 34 to measure a quantity of can bodies having undergone the printing by the printing device 30. The printing device 30 further includes a user interface 35 for presentation of information to the user operating the printing device 30 and for receiving inputs from the user. The printing device 30 further includes a storage section 36 to store printing image information and other information obtained.

The printing section 33 is capable of conducting digital ink-jet printing on can bodies and changing printed content for each can body. These features are distinct from ordinary block copy-based printing on can bodies, providing more user convenience and helping reduce the device weight. At the printing section 33, ink is ejected as droplets from nozzles and adhered onto an outer surface of each can body, whereby images are formed on the outer surface. Further, paint is applied over the images to form a protective layer. The printing section 33 uses, for example, a basic four color ink set of cyan (C), magenta (M), yellow (Y), and black (K) and, when necessary, further uses special inks of special colors prepared for each brand. In this case, an ink-jet head is prepared for each color, so that plural ink-jet heads are used to form images on can bodies. An actinic radiation-curable ink is a preferred choice for the ink to be used. Examples of the actinic radiation-curable ink include an ultraviolet (UV)-curable ink. After the images are formed using the ink-jet heads, paint is applied onto the outer surface of the can body to form a protective layer (overcoat layer).

Can bodies as media subjected to printing may include both those unfilled with beverages, such as beer, and those filled with beverages.

The measurement section 34 measures the quantity of can bodies having undergone the printing by the printing device 30. Specifically, for example, the printing section 33 may be provided with a counter to count each can body having undergone the printing process. Alternatively, for example, a quantity counter may be provided at any point through which can bodies having undergone the printing pass before being discharged from the printing device 30, and may count each can body passing through the point.

The printing device 30 is connected to the user PC 40, which is a computer device operated by the user, either directly with an interface cable or via, e.g., a local area network (LAN), such as Ethernet^{®}. For example, the user PC 40 provides various settings for the printing device 30 and acquires and presents information indicative of the quantity of can bodies having undergone the printing by the printing device 30, in addition to providing printing image information to the printing device 30. The printing device 30 is also connected to the host device 10 via the network 20 to acquire various kinds of information from the host device 10. In an implementation, the communication section 32 of the printing device 30 may directly communicate with the host device 10; in another implementation, the communication section 32 may communicate with the host device 10 via the user PC 40. These implementations may be used selectively depending on the relevant information.

The user PC 40 includes a control section 41 to control the entire device and a memory 42, such as a RAM, used as a working area for calculations. The user PC 40 further includes a storage section 43 to store programs and various setting data. The storage section 43 is implemented by a storage device such as a semiconductor memory and an HDD. The user PC 40 further includes a communication section 44 for data exchanges via the network 20 and/or for data exchanges through connection to the printing device 30. The user PC 40 further includes an operation section 45, such as a keyboard, a pointing device, a touch panel, and/or a bar-code reader, to receive inputs from the user using the printing device 30. The user PC 40 further includes a display section 46, such as one implemented by a liquid crystal display, for presentation of images and text information necessary for printing tasks performed by the user. The user PC 40 further includes a display control section 47 to control the display section 46.

It should be noted that, while the printing device 30 alone may be considered as the "can body printing device", the printing device 30 and the user PC 40 may be collectively considered as the "can body printing device".

### (Functional configuration of the printing device 30)

Functions of the printing device 30 side (the printing device 30 or the printing device 30 and the user PC 40) in the present embodiment are now described. An advantageous feature of the present embodiment lie in that the printing device 30 performs, alone or jointly with the user PC 40, operations including stopping the printing upon detecting that the quantity of can bodies having undergone the printing by the printing device 30 has reached an allowable print quantity per predetermined unit.

The allowable print quantity per predetermined unit is determined based on a quantity of can bodies that are determined to be subjected to printing as regular can bodies.

The "regular can bodies" include, for example, can bodies provided along with the printing device 30 by the company providing the printing device 30 to the user and can bodies provided by an entity authorized by the company providing the printing device 30. In this case, can bodies that are manufactured by any unauthorized entity without permission from the company providing the printing device 30 to the user (e.g., counterfeit products) are "irregular can bodies" that are not regular ones.

However, it is not necessarily easy to correctly recognize the regular can bodies. Thus, as an alternative to this approach, in the present embodiment, the "quantity of can bodies per unit that is predetermined based on an assumption that printing is performed on regular can bodies by the user" is employed to accept and handle can bodies as the regular ones. In other words, while can bodies covered by each unit are not necessarily the regular ones, can bodies covered by each unit are allowed to be handled as the regular ones.

Examples of the predetermined "unit" include print content, delivery destinations of canned products with contents enclosed in can bodies, and types of contents enclosed in can bodies. In these cases, the "print content" is a unit representing a common design printed by the printing device 30 on can bodies. The "delivery destination of canned products" is a unit representing a common delivery destination to which can bodies having undergone (or to undergo) printing by the printing device 30 are to be delivered as canned products. The "type of contents enclosed in can bodies" is a unit representing common contents enclosed in can bodies having undergone (or to undergo) printing by the printing device 30.

Specifically, for example, assume that a type of print content to be printed on can bodies by the printing device 30 is content A. In this case, in order to cause the printing device 30 to print the content A, it is required to set the "content A" as the print content and to set an allowable print quantity for the "content A". When the allowable print quantity for the "content A" is predetermined to be "100", the allowable print quantity is set to be "100". Thus, the printing of the content A by the printing device 30 is initiated, and upon the quantity of can bodies having the content A printed thereon reaching 100, the printing by the printing device 30 is stopped.

In another example, assume that a delivery destination of canned products with the printing produced thereon by the printing device 30 is a company B. In this case, in order to cause the printing device 30 to print, it is required to set the "company B" as the delivery destination of the canned products and to set an allowable print quantity for the "company B". When the allowable print quantity for the "company B" is predetermined to be "200", the allowable print quantity is set to be "200". Thus, the printing by the printing device 30 is initiated, and upon the quantity of can bodies having undergone the printing reaching 200, the printing by the printing device 30 is stopped.

In still another example, assume that contents enclosed in can bodies having undergone (or to undergo) the printing by the printing device 30 is a beverage C. In this case, in order to cause the printing device 30 to print, it is required to set the "beverage C" as the type of contents enclosed in can bodies and to set an allowable print quantity for the "beverage C". When the allowable print quantity for the "beverage C" is predetermined to be "300", the allowable print quantity is set to be "300". Thus, the printing by the printing device 30 is initiated, and upon the quantity of can bodies having undergone the printing reaching 300, the printing by the printing device 30 is stopped.

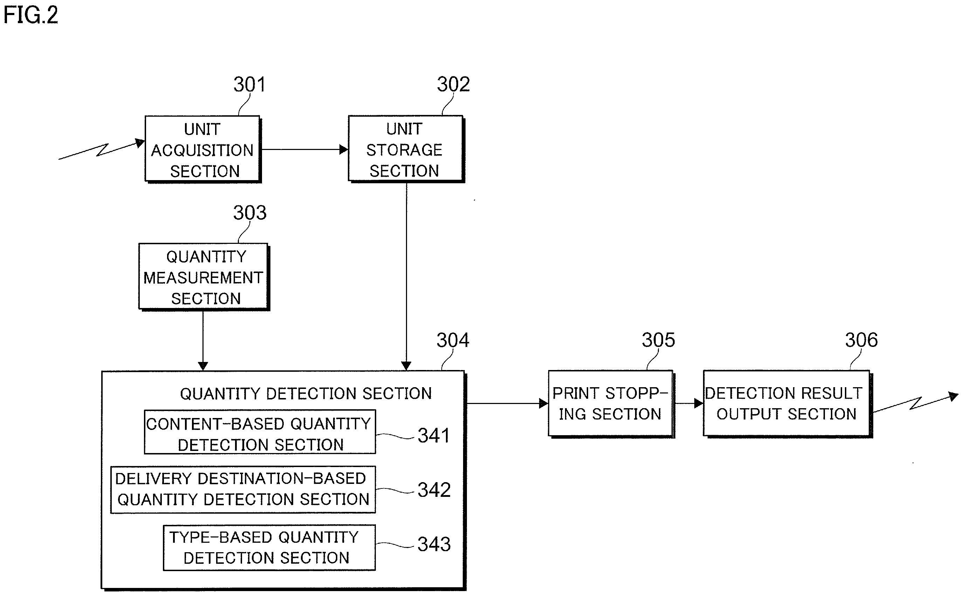

FIG. 2 illustrates a functional configuration of the printing device 30 side (the printing device 30 or the printing device 30 and the user PC 40) according to the present embodiment. The printing device 30 side includes a unit acquisition section 301 to acquire information indicative of a predetermined unit and information indicative of the allowable print quantity for each unit. The printing device 30 side further includes a unit storage section 302 to store the information acquired by the unit acquisition section 301 in the storage section 43 of the user PC 40, the storage section 36 of the printing device 30, and/or the like.

The printing device 30 side further includes a quantity measurement section 303 to measure, using the measurement section 34, information indicative of the quantity of can bodies having undergone the printing by the printing device 30. The printing device 30 side further includes a quantity detection section 304 to detect that, during printing on can bodies by the user, the quantity of can bodies having undergone the printing by the printing device 30 has reached an allowable print quantity per predetermined unit. The printing device 30 side further includes a print stopping section 305 to control a stoppage of the printing on can bodies in response to the quantity detection section 304 detecting that the quantity of can bodies having undergone the printing by the printing device 30 has reached the allowable print quantity per predetermined unit. The printing device 30 side further includes a detection result output section 306 to output, to the host device 10 via the communication section 32 and the network 20, information indicating that the quantity of can bodies having undergone the printing by the printing device 30 has reached the allowable print quantity per predetermined unit.

In order to detect that the quantity of can bodies having undergone the printing by the printing device 30 has reached the allowable print quantity per predetermined unit, the quantity detection section 304 includes a content-based quantity detection section 341, a delivery destination-based quantity detection section 342, and a type-based quantity detection section 343.

The content-based quantity detection section 341 detects that the quantity of can bodies having undergone the printing by the printing device 30 has reached the allowable print quantity defined for each piece of content as the predetermined unit. The delivery destination-based quantity detection section 342 detects that the quantity of can bodies having undergone the printing by the printing device 30 has reached the allowable print quantity defined for each delivery destination as the predetermined unit. The type-based quantity detection section 343 detects that the quantity of can bodies having undergone the printing by the printing device 30 has reached the allowable print quantity defined for each type of contents as the predetermined unit.

The print stopping section 305 controls a stoppage of the printing on can bodies in response to any of the content-based quantity detection section 341, the delivery destination-based quantity detection section 342, and the type-based quantity detection section 343 detecting that the print quantity has reached the corresponding per-unit allowable print quantity described above.

Specifically, for example, the print stopping section 305 forces the printing to stop in response to the content-based quantity detection section 341 detecting that the quantity of printing by the printing device 30 has reached the allowable print quantity defined for each print content. Forcing a stoppage of the printing by the printing device 30 makes it impossible for the user to perform printing on can bodies using the printing device 30 anymore. In other words, the user can perform printing on any can body, including irregular can bodies, until the print quantity reaches the allowable print quantity defined for each print content. Upon the print quantity reaching the allowable print quantity defined for each print content, the printing is forced to stop, so that the user can no longer perform printing on can bodies even though they are regular ones. The allowable print quantity for each print content is defined based on the quantity of can bodies that are determined to be subjected to printing as regular can bodies. Specifically, for example, when the user purchases, as raw materials, regular can bodies in the same quantity (or quantity further in consideration of production yield) as a planned production quantity of canned products determined for each print content, that quantity is set as the allowable print quantity for each print content.

Also, the print stopping section 305 forces the printing to stop in response to the delivery destination-based quantity detection section 342 detecting that the quantity of printing by the printing device 30 has reached the allowable print quantity defined for each delivery destination of canned products. Forcing a stoppage of the printing by the printing device 30 makes it impossible for the user to perform printing on can bodies using the printing device 30 anymore. In other words, the user can perform printing on any can body, including irregular can bodies, until the print quantity reaches the allowable print quantity defined for each delivery destination of canned products. Upon the print quantity reaching the allowable print quantity defined for each delivery destination of canned products, the printing is forced to stop, so that the user can no longer perform printing on can bodies even though they are regular ones. The allowable print quantity for each delivery destination of canned products is defined based on the quantity of can bodies that are determined to be subjected to printing as regular can bodies. Specifically, for example, when the user purchases regular can bodies in the same quantity (or quantity further in consideration of production yield) as a quantity of canned products ordered by the delivery destination, that quantity is set as the allowable print quantity for each delivery destination of canned products.

Also, the print stopping section 305 forces the printing to stop in response to the type-based quantity detection section 343 detecting that the quantity of printing by the printing device 30 has reached the allowable print quantity defined for each type of contents enclosed in can bodies. Forcing a stoppage of the printing by the printing device 30 makes it impossible for the user to perform printing on can bodies using the printing device 30 anymore. In other words, the user can perform printing on any can body, including irregular can bodies, until the print quantity reaches the allowable print quantity defined for each type of contents. Upon the print quantity reaching the allowable print quantity defined for each type of contents, the printing is forced to stop, so that the user can no longer perform printing on can bodies even though they are regular ones. The allowable print quantity for each type of contents is defined based on the quantity of can bodies that are determined to be subjected to printing as regular can bodies. Specifically, for example, when the user purchases regular can bodies in the same quantity (or quantity further in consideration of production yield) as a planned production quantity of canned products determined for each type of contents to be enclosed in can bodies, that quantity is set as the allowable print quantity for each type of contents.

### [Functional configuration of the host device 10]

Functions of the host device 10 according to the present embodiment are now described.

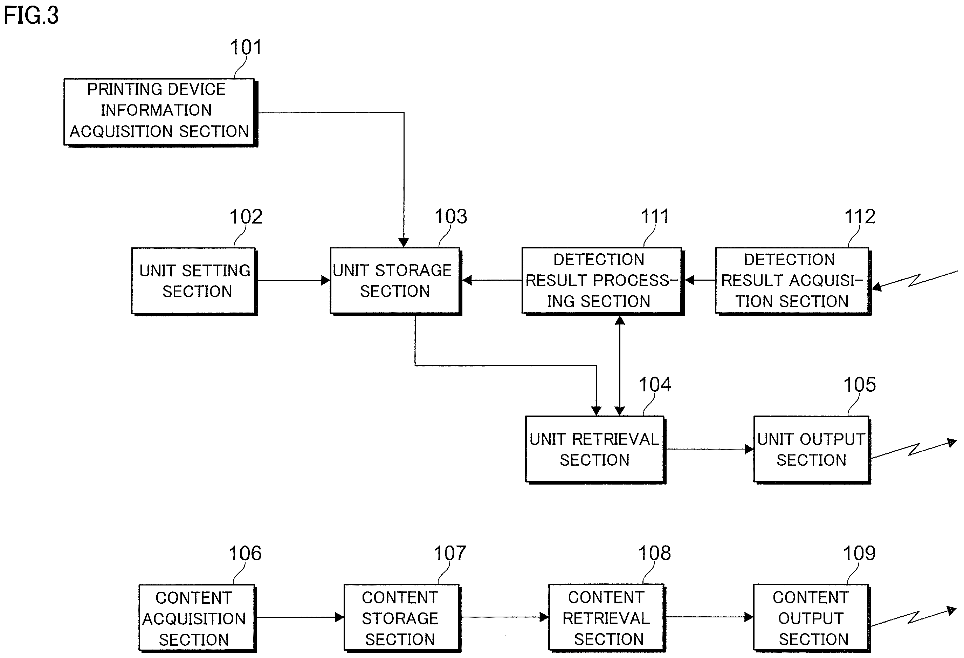

FIG. 3 illustrates a functional configuration of the host device 10 according to the present embodiment. The host device 10 includes a printing device information acquisition section 101 to acquire printing device information from, for example, other computer devices via the network 20. The host device 10 further includes a unit setting section 102 to set a unit used in measuring the quantity of can bodies having undergone the printing and to set a per-unit allowable print quantity for each printing device 30. The host device 10 further includes a unit storage section 103 to store information indicative of the unit used in measuring the quantity of can bodies having undergone the printing and information indicative of the per-unit allowable print quantity in the storage section 13 and/or the DB 50 in association with the printing device information. The host device 10 further includes a unit retrieval section 104 to retrieve, from the unit storage section 103, these stored pieces of information. The host device 10 further includes a unit output section 105 to output these retrieved pieces of information to the printing device 30 side.

The host device 10 further includes a content acquisition section 106 to acquire image information representing content to be printed. The host device 10 further includes a content storage section 107 to store the acquired image information in the storage section 13 and/or the DB 50 in association with the printing device information. The host device 10 further includes a content retrieval section 108 to retrieve these stored pieces of information from the content storage section 107. The host device 10 further includes a content output section 109 to output these retrieved pieces of information to the printing device 30 side. The output of information from the content output section 109 is performed along with the output of information from the unit output section 105 described above.

Digital ink-jet printing on can bodies requires unique processes distinct from printing on ordinary paper. For example, ink-jet printing on can bodies without any undercoat requires performing image processing in consideration of effect of metallic luster of materials for can bodies, such as aluminum cans. Also, liquid ink does not permeate the can bodies and often forms beads. As such, these should be considered in selecting color shades and the like. Consideration should also be given to the fact that printing surface is curved. Due to such a unique nature of printing on can bodies, it is preferred that the host device 10 provides image information representing content to be printed. In the present embodiment, controlling a stoppage of printing for each such content reduces the risk of printing being performed on can bodies in an irregular state.

In an implementation, the printing device information, the information indicative of the unit used in measuring the quantity of can bodies having undergone the printing, and the allowable print quantity for each unit may be acquired via the network 20 and the communication section 14; in another implementation, these pieces of information may be, for example, input by an administrator of the host device 10 via the operation section 15.

The host device 10 further includes a detection result acquisition section 112 to acquire, upon a stoppage of the printing in response to the quantity of can bodies having undergone the printing being detected to have reached the corresponding per-unit allowable print quantity set by the unit setting section 102, information indicative of the stoppage from the printing device 30 side. The host device 10 further includes a detection result processing section 111 to recognize that the printing has been stopped in response to the quantity of can bodies having undergone the printing being detected to have reached the corresponding per-unit allowable print quantity set by the unit setting section 102.

### [Processing by the printing device 30]

Processing by the printing device 30 side (the printing device 30 or the printing device 30 and the user PC 40) is now described with reference to FIGS. 1, 2, and 4.

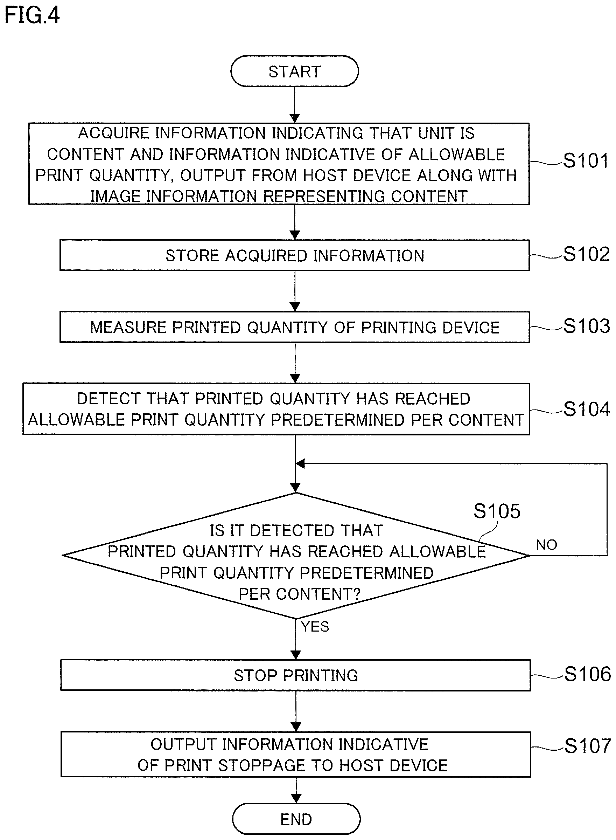

FIG. 4 is a flowchart of a process executed by the printing device 30 side according to the present embodiment. In the example of FIG. 4, the "unit" is assumed to be "content".

First, the unit acquisition section 301 of the printing device 30 acquires information indicating that the unit used in measuring the quantity of can bodies having undergone the printing is "content", and the information indicative of the allowable print quantity per content (step 101). These pieces of information are output from the host device 10 along with image information representing the content. For example, when the allowable print quantity for content A is set to 200, the information indicative of it is acquired. The unit storage section 302 of the printing device 30 stores the information acquired by the unit acquisition section 301 in the storage section 43 of the user PC 40, the storage section 36 of the printing device 30, and/or the like (step 102). For example, when the allowable print quantity for content A is set to 200, the information indicative of it is stored in the storage section 43 of the user PC 40, the storage section 36 of the printing device 30, and/or the like.

The quantity measurement section 303 of the printing device 30 measures, using the measurement section 34, the quantity of can bodies having undergone the printing by the printing device 30 (in FIG. 4, denoted as "printed quantity") (step 103).

The content-based quantity detection section 341 in the quantity detection section 304 of the printing device 30 detects that the quantity of can bodies having undergone the printing by the printing device 30 has reached the allowable print quantity defined for each content as the predetermined unit (step 104).

The print stopping section 305 of the printing device 30 determines whether a detection has occurred, i.e., whether the quantity detection section 304 has detected that the quantity of printing by the printing device 30 has reached the allowable print quantity defined for each content (step 105). Specifically, in response to the content-based quantity detection section 341 of the quantity detection section 304 detecting that the quantity of printing by the printing device 30 has reached the allowable print quantity defined for each content, the print stopping section 305 determines that a detection has occurred. For example, when the allowable print quantity for content A is 200, in response to the content-based quantity detection section 341 detecting that the quantity of can bodies with content A printed thereon has reached 200, the print stopping section 305 determines that a detection has occurred.

If it is not detected that the quantity of printing by the printing device 30 has reached the allowable print quantity (NO at step 105), the process of step 105 is repeated until the content-based quantity detection section 341 detects that the print quantity has reached the allowable print quantity. If the print stopping section 305 determines that a detection has occurred in response to the quantity of printing by the printing device 30 being detected to have reached the allowable print quantity (YES at step 105), the print stopping section 305 stops the printing on can bodies being conducted by the printing section 33 (step 106).

Then, the detection result output section 306 of the printing device 30 outputs information indicative of the occurrence of print stoppage to the host device 10 via the communication section 32 and the network 20 (step 107), and the process thus ends. The information output to the host device 10 may include, for example, information indicating which per-unit allowable print quantity was reached by the quantity of printing by the printing device 30 to cause the print stoppage, in addition to the information indicative of the occurrence of the print stoppage. Specifically, for example, information indicating that the printing was stopped due to the print quantity reaching the per-content allowable print quantity may be output to the host device 10, along with the information indicative of the occurrence of the print stoppage.

### [Processing by the host device 10]

Processing by the host device 10 is now described referring to FIGS. 1, 3, and 5.

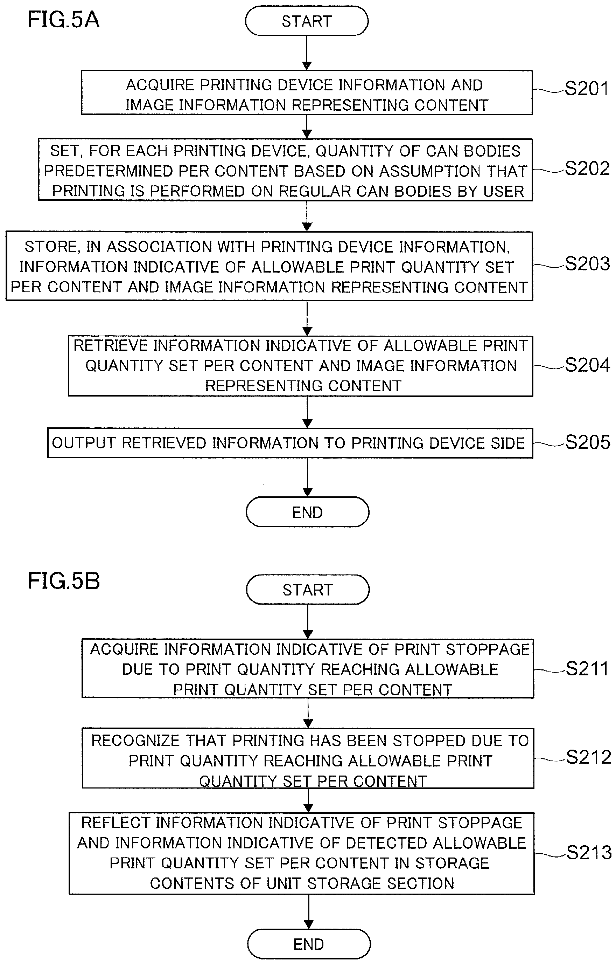

FIGS. 5A and 5B are flowcharts of processes executed by the host device. FIG. 5A illustrates a process executed by the host device 10 prior to printing by the printing device 30, and FIG. 5B illustrates a process executed by the host device 10 after a stoppage of printing by the printing device 30.

First of all, as shown in FIG. 5A, prior to printing by the printing device 30, the printing device information acquisition section 101 of the host device 10 acquires printing device information from, for example, a computer device (not shown) owned by the company providing the printing device 30. Also, the content acquisition section 106 acquires image information representing content from, for example, this computer device (step 201). For each printing device 30, the unit setting section 102 of the host device 10 sets the "content" as the "unit" associated with printing on regular can bodies by the user and sets the "allowable print quantity" predetermined for each unit (step 202). For example, when the per-content quantity predetermined based on the assumption that printing is performed on regular can bodies by the user is defined as 200, the unit setting section 102 sets that per-content quantity. Then, the unit storage section 103 stores, in association with the printing device information, the information indicative of the "content" as the "unit" used in measuring the quantity of can bodies having undergone the printing and the information indicative of the per-content "allowable print quantity" in the storage section 13 and/or the DB 50. The content storage section 107 stores image information representing the content in the storage section 13 and/or the DB 50 in association with the printing device information (step 203). For example, when the per-content quantity predetermined based on the assumption that printing is performed on regular can bodies by the user is 200, the content storage section 107 stores information indicative of it in the storage section 13 and/or the DB 50 in association with the printing device information. Then, the unit retrieval section 104 retrieves, from the unit storage section 103, the information indicative of the "content" as the "unit" used in measuring the quantity of can bodies having undergone the printing and the information indicative of the per-content "allowable print quantity", which were set by the unit setting section 102 (step 204). For example, the information indicating that the "unit" used in measuring the quantity of can bodies having undergone the printing is the "content" and the information indicating that the per-content "allowable print quantity" is 200 are retrieved from the unit storage section 103. Then the unit output section 105 outputs, to the printing device 30 side, the retrieved information indicating that the "unit" used in measuring the quantity of can bodies having undergone the printing is the "content" and the retrieved information indicative of the per-content "allowable print quantity" (step 205), and thus the pre-printing process ends. For example, the information indicating that the "unit" used in measuring the quantity of can bodies having undergone the printing is the "content" and the information indicating that the per-content "allowable print quantity" is 200 are output to the printing device 30 side, and thus the pre-printing process ends.

After a stoppage of the printing by the printing device 30, as shown in FIG. 5B, the detection result acquisition section 112 of the host device 10 acquires, from the printing device 30 side, the information indicative of the stoppage of the printing upon the quantity of printing by the printing device 30 reaching the allowable print quantity set per content (step 211). For example, when the allowable print quantity set per content is 200, the detection result acquisition section 112 acquires, from the printing device 30, information indicative of a stoppage of the printing due to the quantity of printing by the printing device 30 reaching 200. The detection result processing section 111 recognizes that the printing has been stopped due to the quantity of printing by the printing device 30 being detected to have reached the allowable print quantity (step 212). For example, the detection result processing section 111 recognizes that the printing has been stopped due to the print quantity having reached the per-content allowable print quantity of 200. Then, the information indicative of the stoppage of the printing and the information indicative of the detected per-content allowable print quantity are reflected in storage contents of the unit storage section 103 (step 213), and thus the process after the print stoppage ends. For example, the information indicative of the print stoppage due to the print quantity having reached the per-content allowable print quantity is stored in the storage contents of the unit storage section 103, and thus the process after the print stoppage ends. This reflection in the storage contents involves, for example, recording the fact of the print stoppage along with the information indicative of the "content" as the predetermined unit.

Thus, in the present embodiment, prior to the printing process by the printing device 30, the printing device 30 side (the printing device 30 or the printing device 30 and the user PC 40) acquires information indicative of the per-content allowable print quantity set by the host device 10. Detection of whether the quantity of printing by the printing device 30 has reached the per-content allowable print quantity is made by the printing device 30 side. This eliminates the need for the host device 10 to sequentially monitor the processes executed by the printing device 30 side. However, the host device 10 may sequentially monitor the processes executed by the printing device 30 side. That is, while in the above example the printing device 30 side detects that the quantity of printing by the printing device 30 has reached the per-content allowable print quantity, an implementation is possible where the host device 10 is configured to detect it. While in the above embodiment the image information is used as an example of the content, the content may also include audio and video information linked to bar-code information printed on can bodies and accessible via other media.

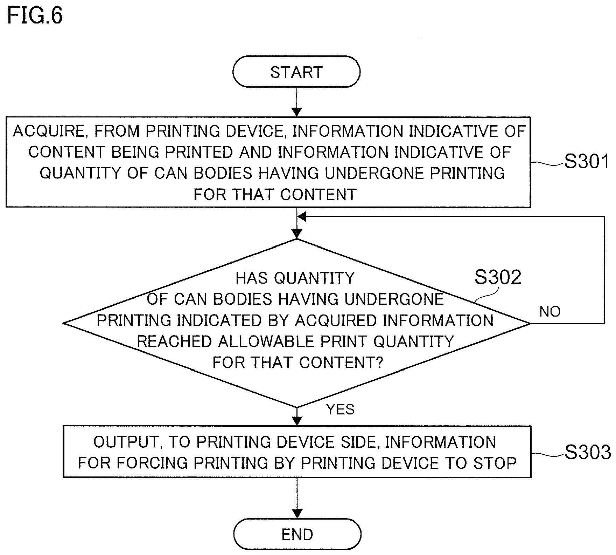

FIG. 6 is a flowchart of a process executed by the host device 10 when the host device 10 measures a print quantity.

In other words, FIG. 6 illustrates a process executed by the host device 10 during printing by the printing device 30.

As shown in FIG. 6, during printing by the printing device 30, the host device 10 acquires, from the printing device 30, information indicative of content being printed and information indicative of a quantity of can bodies having had the content printed thereon (step 301). The host device 10 determines whether the quantity of can bodies having undergone the printing indicated by the acquired information has reached the allowable print quantity for the content (step 302). If the host device 10 detects that the quantity of can bodies having undergone the printing has reached the allowable print quantity for the content (YES at step 302), the host device 10 outputs, to the printing device 30 side, information for forcing the printing by the printing device 30 to stop (step 303). If the quantity of can bodies having undergone the printing has not reached the allowable print quantity for the content (NO at step 302), the host device 10 repeats step 302 until the quantity of can bodies having undergone the printing reaches the allowable print quantity.

As described in detail above, according to the present embodiment, the printing process is stopped once the quantity of can bodies having undergone the printing by the printing device 30 is detected to have reached the per-unit allowable print quantity predetermined based on the assumption that printing is performed on regular can bodies by the user.

This allows, for example, a printing process to be performed on can bodies that can be considered as regular ones by manufacturers providing can bodies, manufacturers providing beverages, or the like.

In the present embodiment, the units set by the unit setting section 102 include the print content, the delivery destinations of canned products, and the types of contents in can bodies. However, units that can be set by the unit setting section 102 are not limited to these. Any unit that may be used in measuring the number of prints produced by the printing device 30 can be employed.

### Reference Signs List

- 1: Can body printing system
- 10: Host device
- 30: Printing device
- 31: Control section
- 32: Communication section
- 33: Printing section
- 34: Measurement section
- 40: User PC
- 301: Unit acquisition section
- 302: Unit storage section
- 303: Quantity measurement section
- 304: Quantity detection section
- 305: Print stopping section
- 306: Detection result output section
- 341: Content-based quantity detection section
- 342: Delivery Destination-based quantity detection section
- 343: Type-based quantity detection section

## Claims

1. A can body printing system comprising:
a measurement section configured to measure, for a predetermined unit, a quantity of can bodies subjected to printing;
a detection section configured to detect, for the unit, that the quantity reaches a predetermined allowable quantity of can bodies for the printing; and
a control section configured to control a stoppage of the printing in response to detection by the detection section.

2. The can body printing system according to claim 1, wherein the measurement section is configured to measure the quantity of can bodies subjected to the printing by using a piece of content used for the printing as the unit, and
the detection section is configured to detect that the quantity of can bodies subjected to the printing reaches an allowable quantity of can bodies for the printing, the allowable quantity being predetermined for the piece of content.

3. The can body printing system according to claim 1, wherein the measurement section is configured to measure the quantity of can bodies subjected to the printing by using a delivery destination of the can bodies as the unit, and
the detection section is configured to detect that the quantity of can bodies subjected to the printing reaches an allowable quantity of can bodies for the printing, the allowable quantity being predetermined for the delivery destination.

4. The can body printing system according to claim 1, wherein the measurement section is configured to measure the quantity of can bodies subjected to the printing by using a type of contents enclosed in the can bodies as the unit, and
the detection section is configured to detect that the quantity of can bodies subjected to the printing reaches an allowable quantity of can bodies for the printing, the allowable quantity being predetermined for the type of contents.

5. A can body printing system comprising:
a host device; and
a can body printing device configured to digitally print on can bodies, the can body printing device being subject to a limit on printing imposed by the host device,
wherein the can body printing device is configured to:
acquire content to be processed for printing on can bodies, wherein a limited quantity of can bodies is allowed to have the content printed thereon; and
print the acquired content on can bodies in the limited quantity.

6. The can body printing system according to claim 5, wherein
the host device is configured to limit on a number of can bodies on which the content is to be printed, based on a number of can bodies that are determined to be subjected to printing as regular can bodies.

7. A can body printing device comprising:
a printing section configured to print on can bodies;
a measurement section configured to measure a quantity of the can bodies subjected to printing; and
a stopping section configured to stop the printing in response to the quantity reaching a predetermined allowable quantity of can bodies for the printing, the predetermined quantity being predetermined for each predetermined unit.
